**Europäisches Patentamt**

**European Patent Office**

**Office européen des brevets**

(19)

(11) Veröffentlichungsnummer: **0 451 133 A1**

(12) # EUROPÄISCHE PATENTANMELDUNG

(21) Anmeldenummer: **91890052.3**

(22) Anmeldetag: **19.03.91**

(51) Int. Cl.$^5$: **C10L 10/00**, B01D 53/34, F23J 7/00, F23J 15/00

(30) Priorität: **03.04.90 AT 779/90**

(43) Veröffentlichungstag der Anmeldung: **09.10.91 Patentblatt 91/41**

(84) Benannte Vertragsstaaten: **BE CH DE DK ES FR GB IT LI LU NL SE**

(71) Anmelder: **MAGINDAG Steirische Magnesit-Industrie Aktiengesellschaft Fleschgasse 34 A-1130 Wien (AT)**

(72) Erfinder: **Birkner, Friedrich, Dr. A-3384 Gross Sierning Nr. 33 (AT)**

(74) Vertreter: **Haffner, Thomas M., Dr. et al Patentanwaltskanzlei Dipl.-Ing. Adolf Kretschmer Dr. Thomas M. Haffner Schottengasse 3a A-1014 Wien (AT)**

(54) **Verfahren zur Verhinderung der Bildung von polychlorierten Dibenzodioxinen/Furanen (PCDD/F) in Verbrennungs- bzw. Vergasungsanlagen.**

(57) Bei einem Verfahren zur Verhinderung der Bildung von PCDD/F in Verbrennungs- bzw. Vergasungsanlagen, insbesondere Müllverbrennungsanlagen und Kohlefeuerungen bzw. -vergasungen, bei welchem vor einem Filter für die Abgase Inhibitoren für die katalytische Rekombination von PCDD/F, wie z.B. tert. aliphatische Amine, insbesondere Triethanolamin in den Gasstrom eingespeist werden, wird vor der Einspeisung der Inhibitoren MgO und/oder Mg(OH)$_2$ und/oder MgCO$_3$ in den Gasstrom eingeblasen.

EP 0 451 133 A1

Die Erfindung bezieht sich auf ein Verfahren zur Verhinderung der Bildung von PCDD/F in Verbrennungs- bzw. Vergasungsanlagen, insbesondere Müllverbrennungsanlagen und Kohlefeuerungen bzw. -vergasungen, bei welchem vor einem Filter für die Abgase Inhibitoren für die katalytische Rekombination von PCDD/F, wie z.B. tert. aliphatische Amine, insbesondere Triethanolamin, in den Gasstrom eingespeist werden.

Chlorierte Dibenzodioxine und -furane sind als toxische Substanzen bekannt, wobei die Entstehung bzw. Bildung derartiger toxischer Substanzen aus einer Reihe von Ausgangsmaterialien bei Anwendung von Hochtemperaturverfahren, wie beispielsweise Verbrennungs- und Vergasungsverfahren, erfolgen kann. Gegebenenfalls in den zu verbrennenden bzw. zu vergasenden Ausgangsmaterialien enthaltene chlorierte Dibenzodioxine und -furane werden zwar bei den Verbrennungs- bzw. Vergasungstemperaturen zersetzt. Da die genannten toxischen Verbindungen jedoch überaus stabile Verbindungen sind, können sie leicht bei Anwesenheit von Kohlenstoffverbindungen und Chlor bei der Abkühlung durch Rekombination neu gebildet werden, wobei die Bildung derartiger Verbindungen durch katalytisch wirkende Substanzen in den Abgasen wesentlich beschleunigt wird. Derartige katalytisch wirkende Substanzen, wie beispielsweise Schwermetalle, können bei der Verbrennung von Haus- und Industriemüll ohne weiteres in den Abgasen enthalten sein und auch die Verbrennung von chlorhältiger Kohle in Feuerungsanlagen, insbesondere Kraftwerksfeuerungsanlagen, kann zur unerwünschten Bildung derartiger chlorierter Dibenzodioxine bzw. -furane führen.

Zur Beseitigung von chlorierten Dibenzodioxinen und -furnanen wurden bereits eine Reihe von Maßnahmen vorgeschlagen, welche durchwegs darauf abzielten, die bereits gebildeten chlorierten Dibenzodioxine und -furane aus dem Abgas durch Filterung, Adsorption od.dgl., abzutrennen. Derartige Sekundärmaßnahmen führen aber in der Folge zu einem hochtoxischen Konzentrat derartiger chlorierter Dibenzodioxine und -furane. Es wurde daher nach Wegen gesucht die Bildung bzw. Entstehung derartiger chlorierter Dibenzodioxine und -furane bei der Müllverbrennung oder Prozessen, bei welchen eine derartige Entstehung zu befürchten ist, zu unterbinden.

Aus UWSF-Z.Umweltchem. Ökotox.(1989) 4: S. 3-6 ist es bereits bekannt geworden, Inhibitoren einzusetzen, welche die Entstehung dieser Schadstoffe bei der Verbrennung von Müll verhindern. Die bekanntgewordenen Inhibitoren umfassen hiebei im wesentlichen tertiäre aliphatische Amine, insbesondere Triethanolamin und Triethylamin sowie Gemische derartiger Amine, wobei vorgeschlagen wurde, diese Inhibitoren bei Temperaturen unterhalb der Zersetzungstemperatur der Inhibitoren, insbesondere bei Temperaturen von etwa 400°C, in das Rauchgas einzudüsen. Die Verwendung derartiger Inhibitoren hat gemäß der genannten Literaturstelle zu einer Reduzierung der PCDD/F-Fracht um mehr als 95 % geführt, wobei die Verwendung derartiger Inhibitoren und der Effekt dieser Inhibitoren im wesentlichen bestätigt, daß wesentliche Teile der in Hausmüllverbrennungsanlagen produzierten Schadstofffrachten an PCDD und PCDF erst nach der eigentlichen Verbrennung entstehen, u.zw. dann, wenn die Rauchgase zum Zweck der Energiegewinnung im Kessel abgekühlt werden.

In UWSF-Z.Umweltchem. Ökotox.(1989) 4: S. 3-6 werden weiters Versuche berichtet, gemäß welchen Kalk zur Einbindung des Chlorgehaltes zugegeben wurde, um die Wirkung des Inhibitors zu unterstützen. Es wurde allerdings gefunden, daß die Wirkung des Inhibitors ohne Zugabe von Kalk zum Brennstoff eintritt.

Die Verwendung von Kalk zur Einbindung des Chlorgehaltes und damit zur Abtrennung eines wesentlichen Reaktionspartners für die Entstehung chlorierter Dibenzodioxine und -furane ist aber auch unabhängig von dem Umstand, daß sie im Zusammenhang mit den verwendeten Inhibitoren keine Verbesserungen erkennen ließ, aus anderen Gründen nicht wünschenswert. In Müllverbrennungsanlagen, in welchen Rauchgase zum Zweck der Energiegewinnung abgekühlt werden, schlagen sich nämlich Kalziumverbindungen an den Kühlflächen nieder und führen zu einem Zuwachsen der Kühlkanäle bei gleichzeitiger wesentlicher Verringerung des Wirkungsgrades der Kühlung. Kalziumverbindungen sind in der Regel in erheblichem Ausmaß bereits in den Einsatzmaterialien bei der Müllverbrennung enthalten, und derartige Kalziumgehalte führen zu einem Anstieg der Schlackenmenge bei der Verbrennung. Der in den Abgasweg gelangende Anteil derartiger Kalziumverbindungen wird zu einem großen Teil zu Anhydrit umgesetzt, wobei eine nennenswerte Umsetzung mit gegebenenfalls im Abgas enthaltenem Chlor nicht beobachtet werden konnte. Darüberhinaus würde im Abgas enthaltenes Kalziumoxid auf Grund des Überangebotes von $CO_2$ rasch zu Kalziumkarbonat reagieren, so daß auch hier eine nennenswerte Abbindung von Chlor nicht zu erwarten ist.

Die Erfindung zielt nun darauf ab, ein Verfahren der eingangs genannten Art dahingehend weiterzubilden, daß die Schadstofffracht, insbesondere die Fracht an PCDD/F, weiter reduziert wird und gleichzeitig ein Anwachsen von unerwünschten Ablagerungen auf Überhitzern bzw. Kühlflächen im Abgasweg unterdrückt wird. Zur Lösung dieser Aufgabe besteht das erfindungsgemäße Verfahren im wesentlichen darin, daß vor der Einspeisung der Inhibitoren MgO und/oder Mg(OH)$_2$ und/oder MgCO$_3$ in den Gasstrom eingeblasen wird. Dadurch, daß vor der Einspeisung der Inhibitoren MgO und/oder $Mg(OH)_2$ und/oder $MgCO_3$ in den Gasstrom eingeblasen wird, wird sichergestellt, daß gegebenenfalls im Gasstrom enthaltenes Chlor sicher durch Magnesium abgebunden wird, wodurch die Schadstofffracht, insbesondere die Fracht an PCDD/F, weiter herabgesetzt werden kann. Die Einspeisung derartiger Magnesiumverbindungen in den Gasstrom hat hiebei zusätzlich den Vorteil, daß MgO nicht verschlackt, sondern tatsächlich im Gasstrom zur Wirkung gelangt und weiters den Vorteil, daß gegebenenfalls gebildete Ablagerungen von im zu verbrennenden Ausgangsmaterial enthaltenen Kalziumverbindungen plastifiziert und von den Kühlflächen abgesprengt werden. Insgesamt führt somit der Zusatz von derartigen Magnesiumverbindungen in den Gasstrom nicht nur zu einer Reduzierung der Schadstofffracht, sondern gleichzeitig auch zu einer Verbesserung des Wirkungsgrades der Wärmerückgewinnung, da ein Anwachsen von Ablagerungen und ein Zuwachsen der Strömungswege verhindert wird. Magnesiumverbindungen der genannten Art zeichnen sich hiebei dadurch aus, daß sie auch bei relativ hohen Temperaturen rasch mit Halogenen reagieren und daß diese Reaktion mit Halogenen nicht durch das Überangebot von $CO_2$ und $SO_2$ unterdrückt wird. Die Verwendung von $Mg(OH)_2$ führt hiebei dazu, daß unmittelbar nach der Einspeisung eine rasche Zerlegung der eingeblasenen Magnesiumverbindungen unter Wasserdampfabgabe erfolgt, wobei das hiebei gebildete MgO in statu nascendi eine besonders hohe Reaktivität gegenüber Halogenverbindungen und Halogenen aufweist. Magnesiumsalze der genannten Art, insbesondere nach ihrer Kaustifizierung, eignen sich darüberhinaus auch hervorragend als Adsorbentien, welche eine Reihe weiterer Schadstoffe bevorzugt an der Oberfläche der gebildeten MgO-Teilchen bzw. der eingebrachten MgO-Teilchen binden. MgO zeichnet sich gegenüber Kalziumoxid durch wesentlich größere Porosität und damit eine wesentlich größere spezifische Oberfläche aus, wodurch gleichzeitig sichergestellt wird, daß die eingeblasenen Teilchen über den gesamten Abgasweg leicht in Schwebe gehalten werden und in der Folge im Filter zurückgehalten werden können. Bereits der Zusatz relativ geringer Mengen derartiger Magnesiumverbindungen führt, wie sich in der Praxis gezeigt hat, zu einem bedeutenden Rückgang der Ablagerungen an Überhitzern bzw. Kühlflächen und der Umstand, daß katalytisch wirkende Substanzen, wie beispielsweise Schwermetalle, in hohem Maße an der Oberfläche derartiger thermisch hochbeständiger Magnesiumverbindungen adsorbiert werden, führt in der Folge dazu, daß beim Eindüsen von Inhibitoren die Inhibition der katalytischen Bildung von chlorierten Dibenzodioxinen und -furanen nahezu quantitativ eintritt. Bei der Verwendung von $Mg(OH)_2$ und $MgCO_3$ wird durch thermische Zersetzung MgO gebildet und die thermische Zersetzung führt unmittelbar zu einer wesentlichen Verkleinerung der maximalen Korngröße der eingespeisten Magnesiumverbindungen. Die Begrenzung der Korngröße ist bei der Verwendung von $Mg(OH)_2$ oder $MgCO_3$ aus diesem Grunde nicht sonderlich kritisch, da entsprechend aktive Teilchen mit hoher wirksamer Oberfläche unmittelbar bei der thermischen Zersetzung entstehen. Lediglich im Fall der Verwendung von MgO wird, wie es einer bevorzugten Verfahrensdurchführung entspricht, so vorgegangen, daß MgO mit einer maximalen Korngröße von 100 μ, vorzugsweise 50 μ, eingeblasen wird. Auf diese Weise wird sichergestellt, daß eine große Reaktionsfläche für die Umsetzung mit Halogenen und für die Adsorption anderer Schadstoffe bzw. katalytisch wirkender Substanzen zur Verfügung steht.

In bevorzugter Weise wird im Rahmen des erfindungsgemäßen Verfahrens so vorgegangen, daß MgO und/oder $Mg(OH)_2$ und/oder $MgCO_3$ an einer Stelle des Abgasweges eingeblasen wird, an welcher die Abgastemperaturen wenigstens 600°C, vorzugsweise wenigstens 800°C, betragen. Dadurch, daß bei Abgastemperaturen von wenigstens 600°C, vorzugsweise wenigstens 800°C, die genannten Magnesiumverbindungen eingeblasen werden, wird zum einen sichergestellt, daß die Magnesiumverbindungen über eine hinreichende Verweilzeit im Kontakt mit dem Gas bleiben, bis das Gas den Filter passiert und zum anderen sichergestellt, daß bei Verwendung von $Mg(OH)_2$ und $MgCO_3$ eine hinreichend rasche Kaustifizierung eintritt. Bei Verwendung von $MgCO_3$ kann bei Temperaturen von 800°C das Verfahren sogar so gesteuert werden, daß die Kaustifizierung nicht sofort eintritt und daß der größte Teil der Umsetzung beim Passieren von bereits erfolgten Ablagerungen an Überhitzern bzw. Kühlflächen erfolgt. Die bei der thermischen Zersetzung freiwerdende kinetische Energie führt hiebei zu einem raschen Absprengen von gegebenenfalls bereits gebildeten Ablagerungen und erhöht damit die Standzeit der Überhitzer bzw. Kühler.

In besonders einfacher Weise kann das erfindungsgemäße Verfahren so durchgeführt werden, daß MgO und/oder $Mg(OH)_2$ und/oder $MgCO_3$ mit der Sekundärluft oberhalb der Verbrennungsebene eingebracht wird, wodurch gleichzeitig sichergestellt wird, daß die Einspeisung bei den geforderten Mindesttemperaturen von 600°C bzw. 800°C erfolgt.

Das zum Einsatz gelangende MgO kann durch entsprechende Verfahrensführung so gebildet werden, daß es eine hohe spezifische Oberfläche aufweist. Bei kaustischen Prozessen kann die Reaktivität des eingesetzten Magnesiumoxids durch latente Gitterverspannungen erhöht werden, wobei das Ausmaß derartiger latenter Gitterverspannungen von der Verfahrensführung beim Herstellen des kaustischen Produktes abhängt. Insbesondere lassen sich bei entsprechender Verfahrensführung Porositäten in der Größenordnung von 50 % erzielen, und es wird bevorzugt im Rahmen der erfindungsgemäßen Verfahrensweise ein Magnesiumoxid mit einer spezifischen Oberfläche von > 5 $m^2$/g vorzugsweise > 10 $m^2$/g eingesetzt. Ein derartiges Magnesiumoxid führt zu einer nahezu quantitativen Immobilisierung von Schwermetallen, wobei ein entsprechender Überschuß an Magnesiumverbindungen eingesetzt werden muß, um gleichzeitig Schwefelverbindungen sicher abbinden zu können. Das Ausmaß der einzubringenden Magnesiumverbindungen läßt sich auf Grund der relativ raschen und im wesentlichen quantitativen Umsetzungen bei der Verwendung von Magnesiumverbindungen besonders einfach kontrollieren und einer Regelung unterwerfen, wobei bevorzugt so vorgegangen wird, daß die Menge an eingebrachten Mg-Verbindungen in Abhängigkeit vom pH-Wert einer wäßrigen Aufschlämmung von im Gasweg auftretenden Abscheidungen geregelt wird. Insbesondere soll für eine derartige Regelung so vorgegangen werden, daß bei Unterschreiten eines pH-Wertes von 8 die Menge an einzubringenden Mg-Verbindungen erhöht wird. Durch die Einstellung eines derartigen pH-Wertes von über 8 wird sichergestellt, daß auch in den Abgasen enthaltene Schwefelverbindungen sicher abgebunden werden und eine hinreichende Reaktivität für die Abbindung von Halogenen oder Halogenverbindungen verbleibt. Gleichzeitig wird ein Korrosionsschutz erzielt.

Die bekannte Inhibition, bei welcher im Abgas vorhandene Schwermetalle komplexiert werden, wodurch sie für eine katalytische Reaktion nicht mehr wirksam sind, vermindert die Menge der rückgebildeten PCDD/F merklich. An die zum Einsatz gelangenden Inhibitoren wird somit lediglich die Anforderung gestellt, daß sie bei der Temperatur der Umsetzung mit den Schwermetallen nicht selbst zersetzt werden, wodurch sich bei Verwendung von Triethanolamin und Triethylamingemischen Temperaturen in der Größenordnung von 400°C als besonders vorteilhaft erwiesen haben. Prinzipiell kann die erfindungsgemäße Verfahrensführung, bei welcher Magnesiumverbindungen zur Abbindung und Eliminierung der Halogene eingesetzt werden, aber mit beliebigen Inhibitoren Verwendung finden, welche eine entsprechende Temperaturstabilität aufweisen. Als Inhibitor ist in diesem Sinn jedes entsprechend temperaturstabile Katalysatorgift aufzufassen.

Insgesamt führt somit die Verwendung der erfindungsgemäß vorgeschlagenen Magnesiumverbindungen gemeinsam mit derartigen Inhibitoren zu der weiteren Herabsetzung der emittierten Schadstoffmenge bzw. der gebildeten Schadstoffmenge, wobei gleichzeitig wesentliche Vorteile in der Verfahrensführung auch dann erzielt werden, wenn Müll mit hohem Kalziumsalzgehalt zum Einsatz gelangt.

Im Rahmen der erfindungsgemäßen Verfahrensführung hat es sich bei konventionellem Haushalts-, Gewerbe- bzw. Kommunalmüll für ausreichend erwiesen, Magnesiumverbindungen in einer Menge von 200 g/t bis 2500 g/t Müll einzusetzen. Lediglich bei der Verbrennung von Sondermüll kann es erforderlich werden, den Anteil an Magnesiumverbindungen zur Herabsetzung der Bildung von PCDD/F noch weiter zu erhöhen.

Ein Einblasen von Magnesiumverbindungen bei Abgastemperaturen von wenigstens 600°C ist nicht nur im Hinblick auf die noch erforderliche Kaustifizierung von Verbindungen, wie Mg(OH)$_2$ und MgCO$_3$, von Vorteil. Auch bei der Verwendung von MgO ergibt sich bei einer derartigen Temperatur ein Optimum einer raschen Umsetzung mit Halogenen und damit eine quantitative Abtrennung, wobei das gebildete MgCl$_2$ sich als hinlänglich stabil erwiesen hat und keine nennenswerten Tendenzen zu neuerlicher Zersetzung bzw. Umsalzung bis zum Filter erkennen ließ. Gegenüber Kalziumoxid hat Magnesiumoxid hiebei nicht nur den Vorteil, daß das Ausmaß der Ablagerungen an den Überhitzern wesentlich herabgesetzt wird und sogar bereits gebildete Ablagerungen abgelöst werden, sondern auch den Vorteil, daß MgO bei Temperaturen unter 800°C keine nennenswerte Neubildungstendenz zu MgCO$_3$ aufweist, obwohl der CO$_2$-Partialdruck in dem Abgas mit Sicherheit wesentlich größer ist als der Partialdruck aller anderen Gaskomponenten. CaO würde auch bei Temperaturen unter 800°C, insbesondere bei Temperaturen zwischen 600°C und 700°C, zu einer raschen Neubildung von CaCO$_3$ und damit zu einem noch rascheren Anwachsen von Ablagerungen an Kühlflächen bzw. Überhitzern führen.

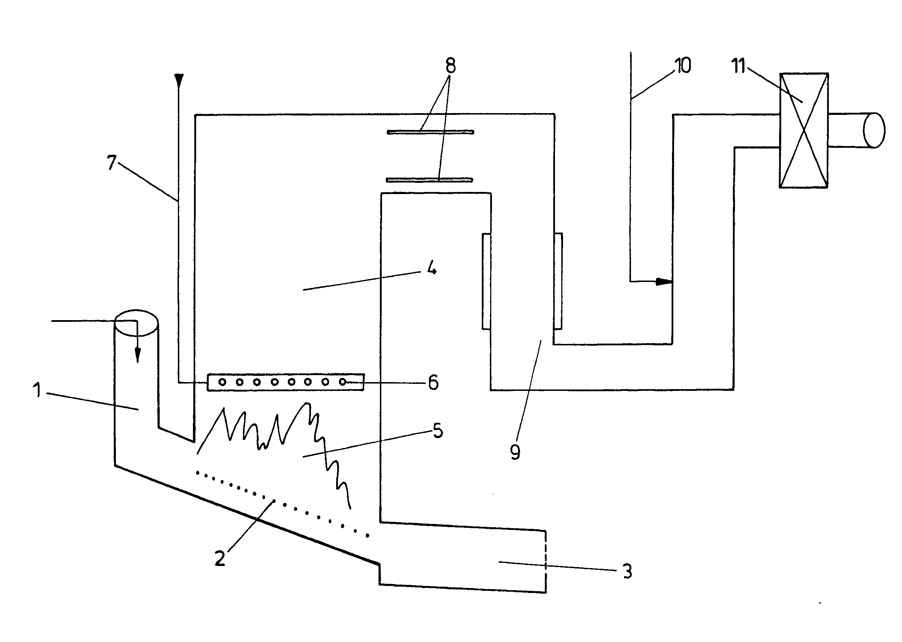

Die Erfindung wird nachfolgend an Hand eines in der Zeichnung schematisch dargestellten Ausführungsbeispieles näher erläutert. In dieser ist schematisch eine Müllverbrennungsanlage dargestellt, in welcher die erfindungsgemäß vorgesehenen Zusätze, nämlich Inhibitor und MgO und/oder MgCO$_3$ und/oder Mg(OH)$_2$, in den Weg des Abgases der Müllverbrennung eingebracht werden.

Hiebei wird über ein Zuführungsrohr 1 zu verbrennender Müll, insbesondere Gewerbe- oder Hausmüll, auf einen geneigten Rost 2 aufgebracht, auf welchem die Verbrennung des Mülls erfolgt. Nach einer vollständigen Verbrennung des Mülls werden unverbrennbare Bestandteile des Mülls als Schlacke in ein Schlackengefäß 3 ausgebracht und in der Folge verhaldet.

Die Verbrennung des Mülls wird bei dieser Anlage so gesteuert, daß in einem Abzugschacht 4 in eine Ebene über der Brennzone 5 des Mülls Düsen 6 für das Einbringen von Sekundärluft sowie von den erfindungsgemäß vorgesehenen, die Neubildung von PCDD und PCDF verhindernden Zuschlägen vorgesehen ist. Hiebei werden über eine Leitung 7 gemeinsam mit der Sekundärluft MgO und/oder MgCO$_3$ und/oder Mg(OH)$_2$ in einer Menge von 200 bis 2500 g/t Müll eingespeist. Das mit Sekundärluft bzw. den magnesiumhaltigen Zuschlägen angereicherte Abgas wird in der Folge an Kühlflächen 8 vorbei in einen Kühler 9 geleitet. Das Abgas erreicht in dem Kühler 9 Temperaturen in der Größenordnung von etwa 400°C, worauf dem Abgas über Leitung 10 Triethanolamin als Inhibitor der Rekombination von chlorierten Dibenzodioxinen oder Dibenzofuranen zugesetzt wird. Nach Verlassen des Kühlers 9 werden die Abgase über ein Filter 11 geleitet, um feste Partikel aus dem Abgas zu entfernen.

Mit Hilfe einer derartigen Müllverbrennungsanlage ist es möglich, durch Zusatz der erfindungsgemäß vorgesehenen Zusatzstoffe, wie MgO und/oder $MgCO_3$ und/oder $Mg(OH)_2$ und durch Zusatz von Inhibitoren Triethanolamin, die Rekombination von polychlorierten Dibenzodioxinen oder Dibenzofuranen weitgehend zu vermeiden. Es gelingt hiebei bis zu in etwa 98 % der polychlorierten Dibenzodioxine und Dibenzofurane aus dem Abgasstrom einer Müllverbrennungsanlage abzutrennen.

## Patentansprüche

1. Verfahren zur Verhinderung der Bildung von PCDD/F in Verbrennungs- bzw. Vergasungsanlagen, insbesondere Müllverbrennungsanlagen und Kohlefeuerungen bzw. -vergasungen, bei welchem vor einem Filter für die Abgase Inhibitoren für die katalytische Rekombination von PCDD/F, wie z.B. tert. aliphatische Amine, insbesondere Triethanolamin, in den Gasstrom eingespeist werden, dadurch gekennzeichnet, daß vor der Einspeisung der Inhibitoren MgO und/oder $Mg(OH)_2$ und/oder $MgCO_3$ in den Gasstrom eingeblasen wird.

2. Verfahren nach Anspruch 1, dadurch gekennzeichnet, daß MgO mit einer maximalen Korngröße von 100 μ, vorzugsweise 50 μ, eingeblasen wird.

3. Verfahren nach Anspruch 1 oder 2, dadurch gekennzeichnet, daß MgO und/oder $Mg(OH)_2$ und/oder $MgCO_3$ an einer Stelle des Abgasweges eingeblasen wird, an welcher die Abgastemperaturen wenigstens 600°C, vorzugsweise wenigstens 800°C, betragen.

4. Verfahren nach Anspruch 1, 2 oder 3, dadurch gekennzeichnet, daß MgO und/oder $Mg(OH)_2$ und/oder $MgCO_3$ mit der Sekundärluft oberhalb der Verbrennungsebene eingebracht wird.

5. Verfahren nach einem der Ansprüche 1 bis 4, dadurch gekennzeichnet, daß MgO mit einer spezifischen Oberfläche von > 5 m²/g, vorzugsweise > 10 m²/g, eingesetzt wird.

6. Verfahren nach einem der Ansprüche 1 bis 5, dadurch gekennzeichnet, daß die Menge an eingebrachten Mg-Verbindungen in Abhängigkeit vom pH-Wert einer wäßrigen Aufschlämmung von im Gasweg auftretenden Abscheidungen geregelt wird.

7. Verfahren nach Anspruch 6, dadurch gekennzeichnet, daß bei Unterschreiten eines pH-Wertes von 8 die Menge an einzubringenden Mg-Verbindungen erhöht wird.

8. Verfahren nach einem der Ansprüche 1 bis 7, dadurch gekennzeichnet, daß Mg-Verbindungen in einer Menge von 200 g bis 2500 g/t Müll eingesetzt werden.

**Europäisches Patentamt**

# EUROPÄISCHER RECHERCHENBERICHT

Nummer der Anmeldung

EP 91 89 0052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | UMWELTWISSENSCHAFTEN UND SCHADSTOFF-FORSCHUNG, ZEITSCHRIFT FÜR UMWELTCHEMIE UND ÖKOTOXIKOLOGIE, Band 4, November 1989, Seiten 3-6; D. LENOIR et al.: "PCDD/F: Verhinderung der Entstehung chlorierter Dibenzodioxine und -furane bei der Müllverbrennung" --- | 1 | C 10 L 10/00<br>B 01 D 53/34<br>F 23 J 7/00<br>F 23 J 15/00 |
| A | CH-B- 452 095 (DEUTSCHE GOLD- UND SILBER-SCHEIDEANSTALT) * Insgesamt * --- | 1-5,8 | |
| A | US-A-2 466 632 (BORUS) * Spalte 3 * --- | 1 | |
| A | EP-A-0 156 784 (NORRKÖPINGS KRAFT) * Insgesamt * --- | 1-5,8 | |
| A | DE-A-3 615 027 (RADKE et al.) * Insgesamt * --- | 1-5,8 | |
| A | WO-A-8 909 253 (FLS MILJO) * Insgesamt * --- | 1-5,8 | RECHERCHIERTE SACHGEBIETE (Int. Cl.5) |
| A | US-A-4 256 703 (DIXIT et al.) * Insgesamt * --- | 1-5,8 | C 10 L<br>B 01 D |
| A | US-A-4 842 617 (KUKIN) * Insgesamt * ----- | 1-5,8 | |

Der vorliegende Recherchenbericht wurde für alle Patentansprüche erstellt

| Recherchenort | Abschlußdatum der Recherche | Prüfer |
|---|---|---|
| DEN HAAG | 11-07-1991 | DE LA MORINERIE B.M.S.E. |